# EUROPÄISCHE PATENTANMELDUNG

(11) **EP 0 961 434 A2**
(43) Veröffentlichungstag der Anmeldung: **01.12.1999**
(21) Anmeldenummer: 99810402.0
(22) Anmeldetag: 07.05.1999
(51) Int. Cl.: H04J 1/12, H04J 4/00

(54) **Verfahren zur Mehrkanalübertragung über ein medium gegebener Bandbreite**

(30) Priorität: 25.05.1998 DE 19823235
(71) Anmelder: ABB RESEARCH LTD., 8050 Zürich (CH)
(72) Erfinder: Dzung, Dacfey, Dr., 5430 Wettingen (CH)
(74) Vertreter: Clerc, Natalia

(57) **Zusammenfassung**

Zur Datenübertragung von Daten aus mehreren Kanälen (K₁, K₂, K₃ ...) werden jedem Kanal mehrere Frequenzbänder (FB) zugeteilt. Die Frequenzbänder jedes Kanals sind dabei möglichst gleichmässig über die Bandbreite (BW) des Übertragungsmediums verteilt und die Frequenzbänder verschiedener Kanäle wechseln sich ab. Somit werden sowohl schlechte als auch gute Frequenzbänder gerecht auf alle Kanäle verteilt. Das erfindungsgemässe Verfahren eignet sich insbesondere zur Datenübertragung in Hoch-, Mittel- und Niederspannungsleitungen.

## Beschreibung

Die Erfindung bezieht sich auf ein Verfahren zum Übertragen von Daten mehrerer Kanäle über ein Medium gemäss Oberbegriff von Anspruch 1. Verfahren dieser Art werden als Mehrfachzugriffverfahren (engl. "multiple access methods") bezeichnet.

Ein Verfahren dieser Art ist zum Beispiel unter dem Begriff "FDMA" (Frequency Division Multiple Access) bekannt. Bei FDMA wird jedem Kanal (= Sender/Empfänger-Paar) ein separates Frequenzband zugeordnet. FDMA hat bei frequenzabhängigen Übertragungsmedien den Nachteil, dass unterschiedliche Frequenzbänder unterschiedliche Übertragungsqualitäten besitzen können. Eine "faire" Verteilung der Frequenzbänder, bei der z.B. alle Kanäle gleichberechtigt sind, ist schwierig.

Es stellt sich deshalb die Aufgabe, ein Verfahren der eingangs genannten Art bereitzustellen, das eine möglichst faire Zuordnung der Übertragungskapazität auf die einzelnen Kanäle erlaubt.

Diese Aufgabe wird vom Verfahren gemäss Anspruch 1 gelöst.

Erfindungsgemäss werden also verteilt über die Bandbreite des Mediums jedem Kanal mehrere Frequenzbänder zugeordnet, wobei zwischen mindestens zwei der Frequenzbänder eines Kanals mindesetens ein Frequenzband eines anderen Kanales liegt. Somit stehen jedem Kanal Frequenzbänder in unterschiedlichen Frequenzbereichen zur Verfügung. Es fällt deshalb weniger ins Gewicht, wenn ein einzelner Frequenzbereich eine hohe Störanfälligkeit besitzt, und die Übertragungskapazität des Mediums wird gerechter auf die Kanäle aufgeteilt.

Eine besonders gerechte Aufteilung ergibt sich, wenn die Frequenzbänder jedes Kanals im wesentlichen gleichmässig über die Bandbreite des Mediums verteilt sind. Insbesondere können die Frequenzbänder zumindest eines Teils der Kanäle zum Beispiel im wesentlichen äquidistant über die Bandbreite des Mediums verteilt sein.

Für mindestens einen Teil der Kanäle, z.B. für völlig gleichberechtigte Kanäle, kann jeweils das gleiche Verteilungsmuster für die Frequenzbänder verwendet werden, wobei die Verteilungsmuster verschiedener Kanäle lediglich gegeneinander versetzt sind.

Das Verfahren kann besonders effizient bei einer Signalerzeugung mittels inverser Fouriertransformation eingesetzt werden. Jedem Kanal werden dabei mehrere, nicht aufeinanderfolgende Frequenzkomponenten zugeordnet, wobei die Frequenzkomponenten sodann zur Erzeugung des zu übertragenden Signals Fourier-transformiert werden.

Unter Datenübertragung im Sinne der Ansprüche ist die analoge oder digitale Übertragung jeglicher Information zu verstehen, z.B. Ton, Bild, Sprache, numerische Daten, etc.

Die Bandbreite des Mediums, die zur Übertragung der Kanäle zur Verfügung steht, kann der eigentlichen "physikalischen" Bandbreite des Mediums entsprechen. Es ist jedoch auch denkbar, dass nur ein Teil der physikalischen Bandbreite des Mediums für die erfindungsgemässe Übertragung eingesetzt wird, während ein anderer Teil der Kapazität des Mediums für konventionelle Übertragung verwendet wird. Somit kann die gegebene Bandbreite auch aus mehreren, nicht zusammenhängenden Frequenzbereichen bestehen.

Schliesslich ist es auch denkbar, dass innerhalb der gegebenen Bandbreite zusätzlich einzelne Kanäle (z.B. Steuerkanäle oder Kanäle geringer Priorität) übertragen werden, denen je nur ein einziges Frequenzband zugeordnet ist.

Das erfindungsgemässe Verfahren kann auch mit Zeitmultiplex-Modulationsmethoden kombiniert werden.

Das erfindungsgemässe Verfahren eignet sich insbesondere für PLC-Anwendungen ("Power Line Carrier"), d.h. zur Datenübertragung auf Hoch- Mittel- und Niederspannungsleitungen, da die Übertragungsqualität dieser Medien stark frequenzabhängig ist.

Weitere Ausführungen, Vorteile und Anwendungen der Erfindung ergeben sich aus den abhängigen Ansprüchen sowie aus der nun folgenden Beschreibung anhand der Figuren. Dabei zeigen:

Fig. 1 eine Möglichkeit zur Aufteilung des Übertragungsspektrums zwischen mehreren Kanälen,

Fig. 2 eine Ausführung eines Senders zur Implementierung einer Verteilung gemäss Fig. 1,

Fig. 3 eine Ausführung eines Senders für nur einen Kanal,

Fig. 4 einen Empfänger für einen Kanal.

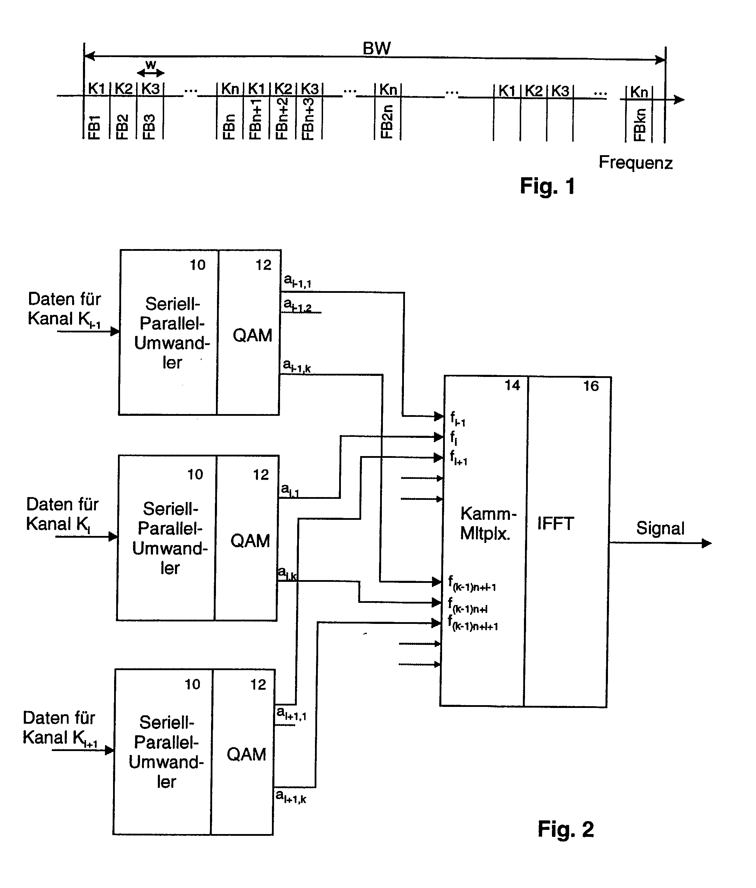

Die Idee, die der vorliegenden Erfindung zugrunde liegt, soll unter Verweis auf die Ausführung gemäss Fig. 1 erläutert werden. Hier wird davon ausgegangen, dass ein Übertragungsmedium zur Verfügung steht, von dem eine gegebene Bandbreite BW genutzt werden kann. In dieser Bandbreite sind die Daten verschiedener Kanäle K₁ ... Kₙ zu übertragen. Hierzu werden jeden Kanal Kᵢ insgesamt k Frequenzbänder FBᵢ, FBₙ₊ᵢ, FB₂ₙ₊ᵢ, FBjₖ₋₁₎ₙ₊ᵢ zugeordnet, innerhalb derer er seine Daten übertragen kann. Diese Frequenzbänder sind äquidistant und gleichmässig auf die gesamte Bandbreite BW verteilt und besitzen je eine Breite w. Vorzugsweise wird die Zahl k dabei möglichst gross gewählt, z.B. k = 128, so dass sich eine feine Unterteilung der zur Verfügung stehenden Bandbreite ergibt. Die Breite w und der Abstand zwischen den Frequenzbändern sollen dabei wesentlich kleiner sein als die Frequenzabhängigkeit der Übertragungsqualität des Mediums.

Diese Zuteilung einzelner Frequenzbänder auf die Kanäle führt dazu, dass jeder Kanal Anteil an Frequenzbereichen hoher und tiefer Qualität hat. Ist also z.B. ein bestimmter Teilfrequenzbereich des Übertragungsmediums stark gestört, so führt dies bei den betroffenen Kanälen nur zu geringen Einbussen in der Übertragungsqualität, da jedem Kanal auch mehrere Frequenzbänder ausserhalb des gestörten Bereichs zugeordnet sind.

Fig. 2 zeigt eine Senderschaltung, mit der eine Frequenzaufteilung gemäss Fig. 1 realisiert werden kann. Dabei sind nur die Schaltungsteile für drei der Kanäle, Kᵢ₋₁, Kᵢ und Kᵢ₊₁, dargestellt.

Für jeden Kanal werden die Daten der Schaltung nach Fig. 2 seriell einem Seriell-Parallel-Umwandler 10 zugeführt. In einer einfachsten Ausführung werden im Seriell-Parallel-Umwandler aus b·k Bits der zugeführten Daten k Worte X_{i,1} ... X_{i,k} von einer Länge von je b Bits erzeugt. Jedes dieser Worte wird in einer Quadratur-Amplituden-Modulationsschaltung 12 in bekannter Weise in einen komplexen Modulationskoeffizienten umgewandelt (z.B. a_{i,1} ... a_{i,k} für Kanal Kᵢ). Diese Modulationskoeffizienten werden einem Kamm-Multiplexer 14 und von dort einer Schaltung 16 zur Berechnung der inversen Fouriertransformierten zugeführt. Der Kamm-Multiplexer 14 ist dabei so ausgestaltet, dass eine Zuteilung der Modulationskoeffizienten gemäss Aufteilung nach Fig. 1 auf die Fourierkompenten f₁ .. fₖₙ erzielt wird, wobei die Fourierkomponente fⱼ die Signalstärke im Frequenzband FBⱼ bestimmt.

Im vorliegenden Beispiel bilden also zum Beispiel die Modulationskoeffizienten a_{i,1} ... a_{i,k} von Kanal Kᵢ die Fourierkomponenten fᵢ ... f₍ₖ₋₁₎ₙ₊ᵢ und bestimmen somit die Modulationsamplituden in den Frequenzbändern FBᵢ ... FB₍ₖ₋₁₎ₙ₊ᵢ.

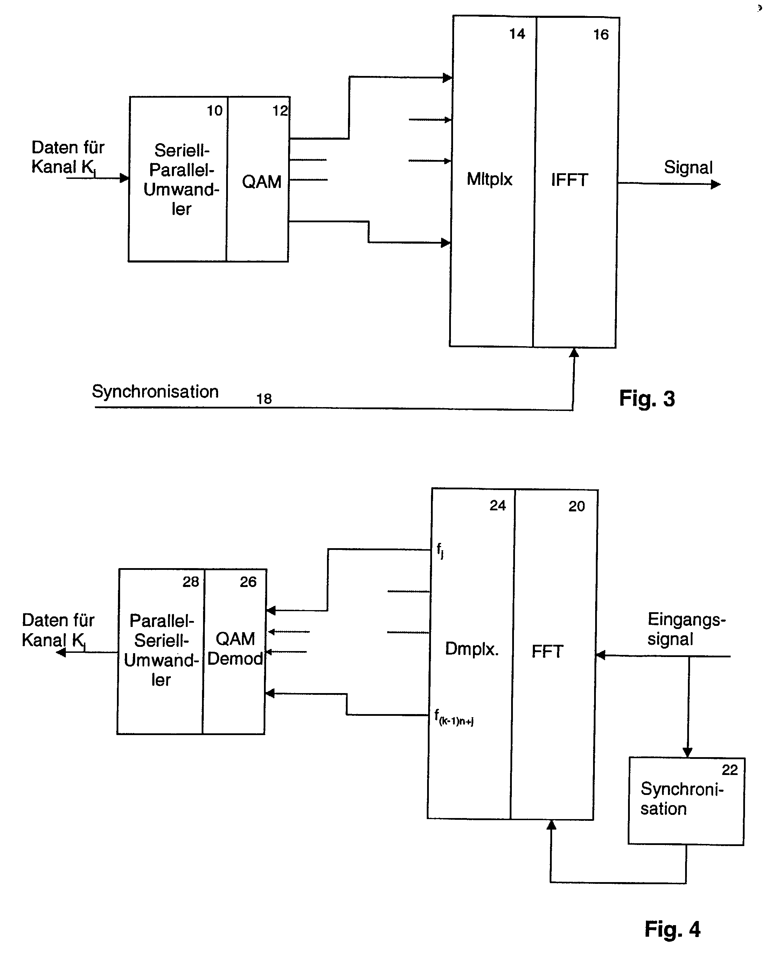

Die Sendersschaltung nach Fig. 2 betrifft den Fall, wo die Daten mehrerer Kanäle am gleichen Ort vorliegen, wie es zum Beispiel bei der Datenübertragung von einer Zentrale zu mehreren Endgeräten der Fall ist. In anderen Situationen speisen separate Endgeräte ihre Daten in das Medium ein. Ein entsprechender Sender für einen einzelnen Kanal Kⱼ ist in Fig. 3 dargestellt. Dieser ist gleich aufgebaut wie jener nach Fig. 2, weist aber nur einen Seriell-Parallel-Umwandler 10 und eine Schaltung zur Erzeugung der Quadratur-Amplituden-Modulation 12 auf. Die so erzeugten Modulationskoeffizienten werden dem Kamm-Multiplexer 14 zugeführt, wo sie die Fourierkomponenten fⱼ ... f₍ₖ₋₁₎ₙ₊ⱼ bilden. Die Schaltungen 16 zur blockweisen Erzeugung der inversen Fouriertransformierten nach Fig. 3 in den einzelnen Sendern müssen zeitlich so untereinander synchronisiert werden, dass ihre Signale synchron beim gemeinsamen Empfänger, zum Beispiel der Zentrale, ankommen. Dies ist erforderlich, um bei einer Demodulation mittels Fouriertransformation die gegenseitige Störung der Kanäle zu verhindern. Deshalb wird den Schaltungen 16 jeweils ein Synchronisationssignal 18 zugeführt. Dieses Synchronisationssignal 18 kann mit bekannten Techniken aus dem am Empfänger ankommenden Signal abgeleitet werden. Die Signale aus den Schaltungen 16 werden sodann in geeigneter Weise in das Medium eingekoppelt, wo sie einander überlagern.

Fig. 4 zeigt schliesslich einen Empfänger zur Demodulation des von den Sendern gemäss Fig. 2 bzw. 3 erzeugten Signals. Zur Analyse des Signals ist eine Fouriertransformations-Schaltung 20 vorgesehen, welche in bekannter Weise von einer Synchronisationsschaltung 22 mit den Transformationsschaltungen 16 der Sender synchronisiert wird. Die Fourier-Koeffizienten von der Schaltung 20 werden einem Kamm-Demultiplexer 24 zugeleitet, von wo sie an die einzelnen Kanäle verteilt werden können.

In der vorliegenden Ausführung wird von der Schaltung gemäss Fig. 4 nur der Kanal Kⱼ demoduliert, indem die entsprechenden Fourierkomponenten fⱼ ...f₍ₖ₋₁₎ₙ₊ⱼ vom Kamm-Demultiplexer 24 einem QAM-Demodulator 26 und sodann einem Parallel-Seriell-Umwandler 28 zugeführt werden.

Sollen weitere Kanäle dekodiert werden, so ist eine entsprechende Zahl von QAM-Demodulatoren und Parallel-Seriell-Umwandlern vorzusehen, denen vom Kamm-Demultiplexer 24 jeweils die dem Kanal zugehörigen Fourierkomponenten zugeführt werden.

In den soweit dargestellten Ausführungsbeispielen besitzen alle Kanäle die gleiche Priorität, und es wird deshalb jedem Kanal die gleiche Zahl von Frequenzbändern zugeteilt. Es ist jedoch auch denkbar, Kanäle verschiedener Priorität zu bedienen. Einem Kanal tieferer Priorität werden in diesem Falle z.B. nur halb so viele Frequenzbänder zugeteilt, z.B. die Frequenzbänder FBᵢ, FB₂ₙ₊ᵢ, FB₄ₙ₊ᵢ, ... Auf jeden Fall sollten die Bänder aber auch in diesem Fall über die ganze Bandbreite BW des Mediums verteilt sein.

Zusätzlich zu den "fair" verteilten Frequenzbändern können einzelne Frequenzbänder auch in "nicht fairer" Weise verteilt werden. So kann z.B. ein einzelnes Frequenzband einem Servicekanal zugeordnet werden.

In den bisher gezeigten Beispielen wurden die Frequenzbänder für jeden Kanal "kammartig", d.h. gleichabständig über die Bandbreite BW des Mediums verteilt, und jedes Frequenzband besass die gleiche Breite w. Die Verteilung der Frequenzbänder geschah für alle Kanäle nach dem gleichen Verteilungsmuster, wobei die Verteilungsmuster unterschiedlicher Kanäle lediglich gegeneinander versetzt waren. Mit zunehmender Frequenz wechseln sich die Frequenzbänder unterschiedlicher Kanäle zyklisch ab.

Es ist jedoch auch denkbar, die Verteilungsmuster, Abstände und Breiten der Frequenzbänder in anderer Weise zu wählen. So kann man z.B. die Abstände und Breiten der Frequenzbänder in Frequenzbereichen hoher Störanfälligkeit grösser wählen.

Wie eingangs erwähnt, eignet sich das erfindungsgemässe Verfahren vor allem für die Datenübertragung auf Hoch-, Mittel- und Niederspannungsleitungen. Bei diesen Medien weisen einzelne Frequenzbänder stark unterschiedliche Übertragungsqualität auf, so dass eine "faire" Verteilung der Bänder von grosser Bedeutung ist. Das Verfahren kann jedoch auch bei anderen leitungsgebundenen oder drahtlosen Übertragungsmedien angewendet werden.

## Patentansprüche

1. Verfahren zum Übertragen von Daten mehrerer Kanäle (Kᵢ) über ein Medium gegebener Bandbreite (BW), dadurch gekennzeichnet, dass jedem Kanal (Kᵢ) mehrere Frequenzbänder (FBⱼ) verteilt über die Bandbreite (BW) des Mediums zugeordnet werden, derart, dass zwischen mindestens zwei der Frequenzbänder eines Kanals mindestens ein Frequenzband eines anderen Kanals angeordnet ist.

2. Verfahren nach Anspruch 1, dadurch gekennzeichnet, dass zwischen jedem Paar von Frequenzbändern eines Kanals Frequenzbänder mehrerer anderer Kanäle angeordnet sind.

3. Verfahren nach einem der vorangehenden Ansprüche, dadurch gekennzeichnet, dass die Frequenzbänder jedes Kanals (Kᵢ) im wesentlichen gleichmässig über die Bandbreite (BW) des Mediums verteilt sind.

4. Verfahren nach einem der vorangehenden Ansprüche, dadurch gekennzeichnet, dass die Frequenzbänder mindestens einiger der Kanäle (Kᵢ) je im wesentlichen äquidistant über die Bandbreite (BW) des Mediums verteilt sind.

5. Verfahren nach einem der vorangehenden Ansprüche, dadurch gekennzeichnet, dass für mindestens einen Teil der Kanäle die Frequenzbänder nach gleichen, aber zueinander versetzten Verteilungsmustern verteilt sind.

6. Verfahren nach einem der vorangehenden Ansprüche, dadurch gekennzeichnet, dass in das Medium ein Signal eingespiesen wird, wobei das Signal aus inverser Fouriertransformation seiner Frequenzkomponenten erzeugt wird und wobei jedem Kanal mehrere, nicht aufeinanderfolgende Frequenzkomponenten zugeordnet werden.

7. Verfahren nach einem der vorangehenden Ansprüche, dadurch gekennzeichnet, dass sich die Frequenzbänder unterschiedlicher Kanäle mit zunehmender Frequenz zyklisch abwechseln.

8. Verfahren nach einem der vorangehenden Ansprüche, dadurch gekennzeichnet, dass das Medium eine Hoch-, Mittel- oder Niederspannungsleitung ist.

9. Verfahren nach einem der vorangehenden Ansprüche, dadurch gekennzeichnet, dass zwischen zwei Frequenzbändern mindestens eines Kanals mehrere Frequenzbänder mehrerer anderer Kanäle angeordnet sind.

10. Verfahren nach einem der vorangehenden Ansprüche, dadurch gekennzeichnet, dass in das Medium von verschiedenen Sendern Signale eingespiesen werden, wobei jeder Sender das Signal durch blockweise inverse Fouriertransformation von Frequenzkomponenten (fᵢ) erzeugt, wobei die blockweise inverse Fouriertransformation der Sender zeitlich synchronisiert ist.
